# FASCICULE DE BREVET EUROPEEN

(11) **EP 0 671 998 B1**
(45) Date de publication et mention de la délivrance du brevet: **02.10.1996**
(21) Numéro de dépôt: 94902702.3
(22) Date de dépôt: 07.12.1993
(51) Int. Cl.: B60C 23/00

(54) **PROCEDE D'AJUSTEMENT DE LA PRESSION DES PNEUMATIQUES D'UN VEHICULE**
VERFAHREN ZUR EINSTELLUNG DES REIFENDRUCKS BEI FAHRZEUGEN
VEHICLE TYRE PRESSURE ADJUSTMENT METHOD

(30) Priorité: 11.12.1992 FR 9215060
(43) Date de publication de la demande: 20.09.1995
(73) Titulaire: COMPAGNIE GENERALE DES ETABLISSEMENTS MICHELIN - MICHELIN & CIE, 63040 Clermont-Ferrand Cédex (FR)
(72) Inventeur: BATTOCHIO, Claudio, E-04004 Almeria (ES)
(74) Mandataire: Bauvir, Jacques
(86) Numéro de dépôt international: EP9303439
(87) Numéro de publication internationale: WO9413499

(56) Documents cités:
- EP-A- 0 019 463
- EP-A- 0 164 917
- EP-A- 0 352 921
- EP-A- 0 378 891
- DE-A- 2 826 635
- US-A- 4 510 979

## Description

La présente invention a pour objet un procédé d'ajustement de la pression des pneumatiques d'un véhicule ; elle concerne plus précisément les véhicules équipés d'une installation centralisée de gonflage pouvant fonctionner même pendant l'utilisation du véhicule, et elle permet d'éviter l'emploi du mode gonflage ou dégonflage habituel.

On sait que la pression de gonflage optimale des pneumatiques dépend des conditions d'utilisation du véhicule et notamment la charge et la vitesse ainsi que la nature du sol. C'est pourquoi on a développé des systèmes capables de modifier la pression même en cours de roulage pour qu'elle ait toujours cette valeur optimale ; ces systèmes comprennent une source ou une réserve d'air comprimé installée à bord du véhicule, des canalisations reliant cette source aux pneumatiques par l'intermédiaire de joints tournants et un sélecteur permettant de connecter la source à chacun des pneumatiques : on peut citer les brevets FR 884 598 et EP 297 837.

Le mode habituel de fonctionnement de ces installations consiste à mesurer périodiquement la pression de chaque pneumatique et à la corriger, le cas échéant, par gonflage ou dégonflage du pneumatique considéré.

Lorsqu'on utilise des valves à double effet, comme celle qui est décrite dans le brevet FR 884 598 par exemple, appelée ci-après "valve d'isolation", on peut ouvrir la valve usuelle à l'aide d'un piston agissant sur cette dernière et actionné par l'air comprimé ; grâce au fonctionnement différentiel de ce piston - qui comporte deux faces de sections différentes - il est possible de maintenir la valve usuelle ouverte même si la pression de commande est un peu inférieure à la pression interne du pneumatique.

Pour contrôler la pression de chaque pneumatique, on le connecte à la source d'air comprimé, ce qui a pour effet d'ouvrir la valve usuelle, puis au bout d'un bref instant, on isole la canalisation d'alimentation en air, ce qui a pour effet d'équilibrer la pression dans la canalisation à la pression du pneumatique et permet ainsi de mesurer la pression. On peut alors procéder au gonflage ou au dégonflage si nécessaire. On vide enfin la canalisation à l'atmosphère, ce qui a pour effet de refermer la valve d'isolation.

Or la demanderesse a constaté avec surprise que, quelle que soit la pression initiale d'un pneumatique, si on répète l'opération de contrôle un certain nombre de fois en connectant le pneumatique à la source d'air comprimé pendant des temps très courts d'égales durées ti, la pression tend finalement vers une valeur pi qui ne dépend que de cette durée ti et de la pression de la réserve d'air comprimé mais absolument pas de la pression initiale du pneumatique avant les contrôles de pression. Autrement dit, à une durée d'impulsion ti, correspond un écart constant entre la pression prévalant dans la source d'air comprimé et la valeur asymptotique de la pression dans le pneumatique. Donc, si la pression dans la source d'air comprimé est constante, la pression (valeur asymptotique) du pneumatique ne dépend que de ti.

Conformément à l'invention, un procédé d'ajustement de la pression des pneumatiques d'un véhicule équipé d'une installation centralisée de gonflage comprenant une source d'air comprimé, un sélecteur, et des canalisations, un joint tournant ainsi qu'une valve d'isolation entre le sélecteur et chaque pneumatique, ledit procédé consistant en ce que, successivement pour chaque pneumatique, le sélecteur connecte la source d'air comprimé au pneumatique par l'intermédiaire de la canalisation et du joint tournant concernés, ce qui a pour effet d'ouvrir la valve d'isolation, après un temps très court ferme l'arrivée d'air comprimé à la canalisation, puis effectue la mesure de la pression qui est devenue la même dans le pneumatique et dans la canalisation, et enfin évacue ladite canalisation à l'atmosphère, ce qui a pour effet de refermer la valve d'isolation , est caractérisé en ce que la durée dudit temps très court est déterminée en fonction de la pression de consigne à obtenir dans le pneumatique concerné, et en ce que l'opération est répétée au moins jusqu'à l'obtention de ladite pression de consigne.

Ce mode opératoire de type itératif peut avantageusement se poursuivre continuellement pendant l'utilisation du véhicule puisque, quand la pression a été obtenue, elle reste maintenue en permanence.

Bien entendu, ce mode itératif n'exclut pas les autres modes de pilotage d'une installation de regonflage centralisée ; par exemple, si le conducteur veut augmenter la pression de consigne d'une quantité importante, il peut utiliser le mode gonflage habituel ou un mode intermédiaire procédant par variations successives, avant d'ajuster finalement la nouvelle pression conformément à l'invention. Ainsi, par exemple, on ajuste la durée dudit temps très court en fonction de la pression de consigne seulement lorsque la pression mesurée a une valeur proche de la pression de consigne. Dans ce cas-là, même si la pression a dépassé la valeur de consigne, grâce à l'invention, elle y reviendra finalement.

Dans une variante avantageuse de l'invention, les opérations d'ajustement de pression se font de manière séquentielle sur la totalité ou sur une partie des pneumatiques, par exemple les pneumatiques du tracteur puis ceux de la remorque. On entend par là que chaque contrôle de pression successif, qui peut avoir pour effet selon l'invention de modifier quelque peu la pression de gonflage du pneumatique concerné, concerne un pneumatique différent du véhicule. Les pressions de gonflage de tous les pneumatiques traités de manière séquentielle évoluent donc très progressivement et de façon globalement simultanée.

Suivant un autre mode de réalisation de l'invention, on peut utiliser la roue de secours comme réserve d'air comprimé.

Le procédé d'ajustement de pression suivant l'invention apporte des avantages substantiels : d'abord, il permet d'ajuster la pression dans les différents pneumatiques d'un véhicule d'une façon continuelle, progressive et équilibrée. Cela améliore beaucoup la sécurité et le confort, car il pourrait être dangereux de modifier momentanément l'équilibre des pressions entre les pneus d'un même essieu, ou entre l'avant et l'arrière d'un véhicule.

Par ailleurs, lorsque l'on dégonfle ou que l'on regonfle un pneumatique et que la différence entre la pression initiale et la pression finale est importante, il arrive que les joints tournants situés entre la valve d'isolation de chaque pneumatique et le réservoir d'air comprimé (qui sont donc soumis à une pression voisine, selon le cas, de celle des pneumatiques ou de celle de l'air comprimé) s'échauffent dangereusement parce qu'ils restent sollicités par la pression trop longtemps. Cela est particulièrement critique dans le cas des poids lourds où la pression de gonflage est de l'ordre de 8 ou 9 bar, et les joints de grands diamètres. L'invention évite ou réduit considérablement l'échauffement des joints tournants car ceux-ci ne sont plus sollicités que de façon non continue, c'est à dire qu'ils ne subissent plus que des sollicitations brèves et répétées, ce qui est moins pénalisant. Cela augmente leur durée de vie et réduit les frais de maintenance ; enfin, il est possible de simplifier et d'alléger l'installation embarquée, et par conséquent d'augmenter la charge utile du véhicule.

On va décrire un exemple de mise en oeuvre de l'invention donné à titre non limitatif, en se référant au dessin annexé sur lequel :
La fig. 1 est un schéma fonctionnel d'une installation pour un véhicule léger ;
Les fig. 2 et fig. 3 sont des relevés de mesures qui illustrent le principe de l'invention ;
La fig. 4 est un diagramme des différents modes de réglage de la pression.

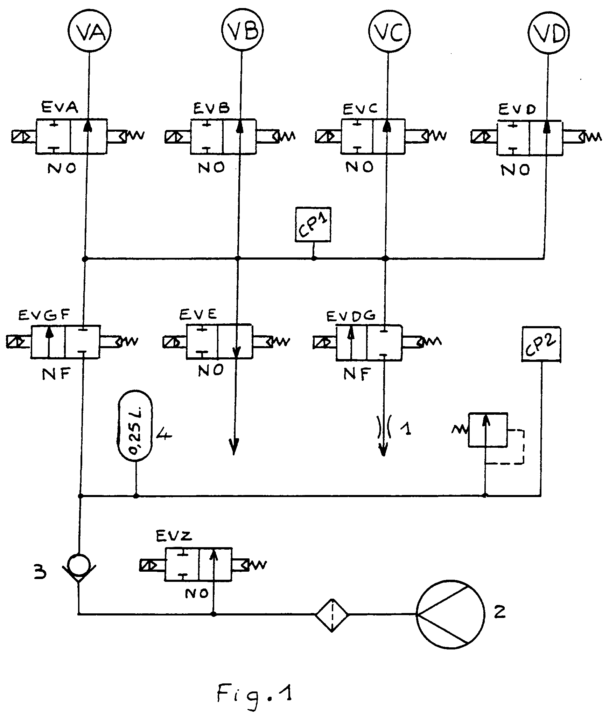

On voit sur la fig. 1, les quatre valves d'isolations VA, VB, VC et VD des quatre pneumatiques (non représentés) montés sur un véhicule léger. Ces valves d'isolation, du type bidirectionnel, ou à commande différentielle, comme celles qui sont décrites dans le brevet FR 884 598 déjà cité, sont actionnées par les électrovannes EVA, EVB, EVC et EVD normalement ouvertes. Pour simplifier le schéma, l'implantation des canalisations sur véhicule, ainsi que la présence de joints tournants entre les valves d'isolation VA, VB, VC, VD et les électrovannes EVA, EVB, EVC, EVD n'ont pas été représentés.

Les quatre canalisations sont raccordées sur un tronc commun auquel sont également raccordées les électrovannes de gonflage EVGF et de dégonflage EVDG normalement fermées, l'électrovanne d'échappement à l'atmosphère EVE normalement ouverte et un contrôleur de pression CP1.

L'électrovanne de dégonflage EVDG ouvre sur une fuite calibrée 1 tandis que l'électrovanne de gonflage EVGF est branchée d'une part à la source d'air comprimé - compresseur 2, clapet de non-retour 3 et électrovanne de mise à l'air libre EVZ - et d'autre part à une réserve d'air comprimé 4 (un quart de litre à 5 bar par exemple).

Les cycles de fonctionnement habituels connus sont les suivants :
- gonflage du pneumatique A : EVA ouverte ; EVB, EVC et EVD fermées ; EVE et EVDG fermées ; EVGF ouverte.
- dégonflage du pneumatique A : EVA ouverte ; EVB, EVC et EVD fermées ; EVE fermée, EVGF ouverte pendant une fraction de seconde (pour ouvrir la valve d'isolation VA), EVDG ouverte.
- contrôle de pression du pneumatique A : EVA ouverte ; EVB, EVC et EVD fermées ; EVE fermée ; EVGF ouverte pendant une fraction de seconde (pour ouvrir la valve d'isolation VA) ; EVDG fermée ; puis EVE ouverte.

Suivant l'invention, c'est cette dernière séquence (contrôle de pression) qui est répétée successivement et séquentiellement pour les quatre pneumatiques A, B, C, D, A, B, C, D, A, ... avec un temps ti d'ouverture de EVGF qui est déterminé suivant la pression de consigne fixée pour chaque pneumatique.

Un cycle complet, c'est-à-dire une action sur chacun des quatre pneumatiques, peut être effectué en quatre secondes avec des durées d'ouverture de EVGF d'un dixième de seconde à chaque fois (et donc la même pression de consigne pour les quatre pneumatiques, dans cet exemple). Notons que la pression de consigne pi ne dépend que de ti si la pression de la source d'air comprimé reste constante, ce qui est supposé être le cas.

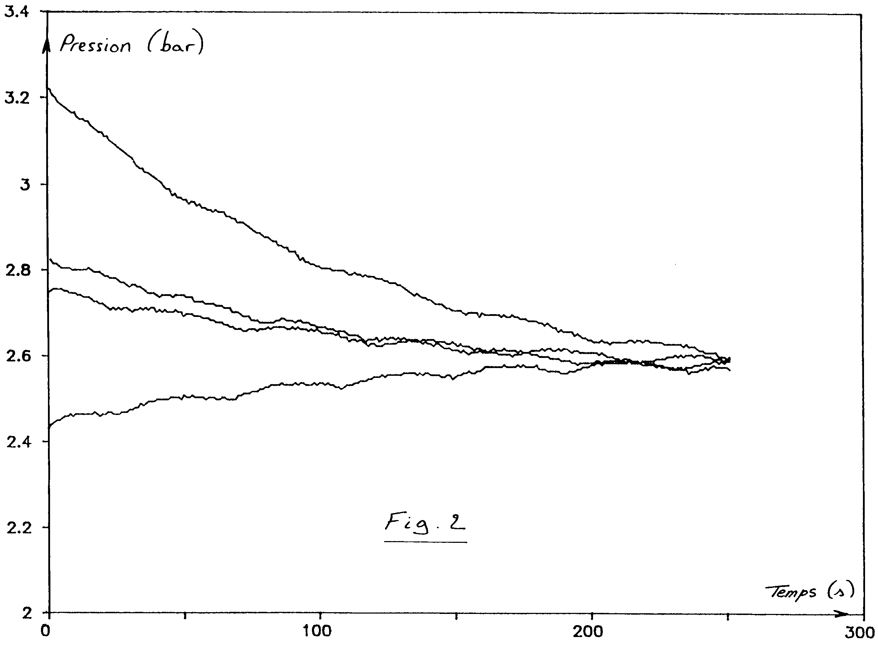

On voit sur la fig. 2 les relevés de mesure de pression faits sur un pneumatique de dimension 225/50 ZR 16, gonflé initialement à 2,4 bar, puis 2,7 bar, puis 2,9 bar et enfin 3,2 bar, auquel on applique le procédé de l'invention avec des impulsions de durée constante (ti = 0,2 seconde) ; on constate que, dans tous les cas, la pression finale est la même, soit Pi = 2,6 bar.

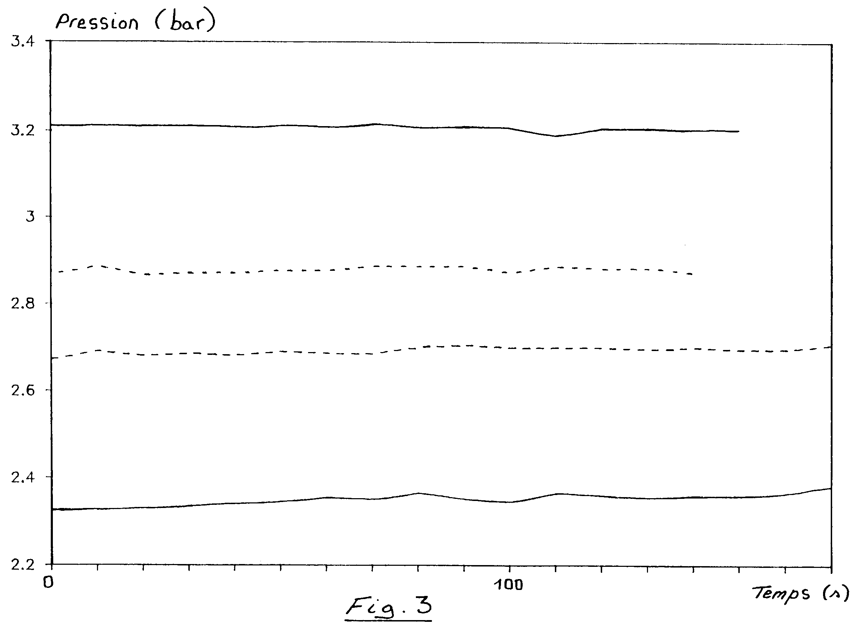

La fig. 3 illustre la suite du processus dans le cas où les opérations d'ajustement de pression se poursuivent continuellement pendant l'utilisation du véhicule :
lorsqu'une pression de consigne a été obtenue par le procédé de l'invention, elle reste maintenue en permanence ; ici, on a quatre valeurs de consigne différentes (2,4 - 2,7 - 2,9 et 3,2 bar) correspondant à quatre durées bien définies du temps très court : 0,105 - 0,150 - 0,180 et 0,225 seconde.

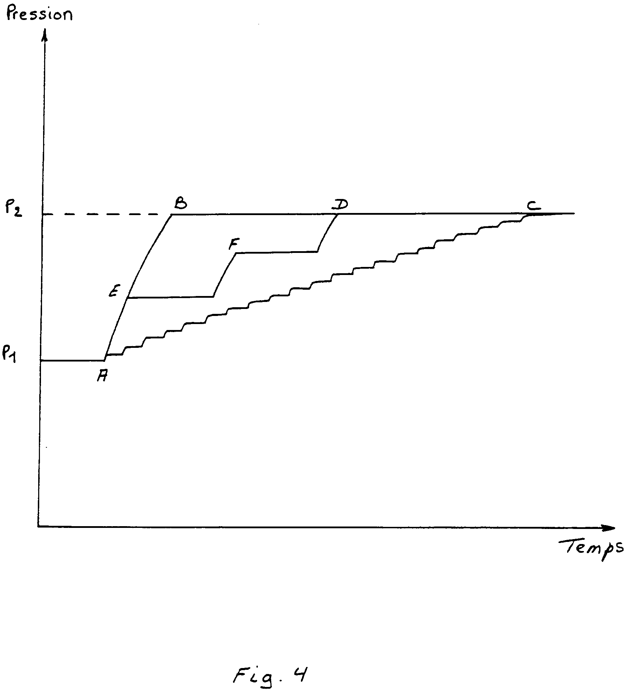

Enfin, la fig. 4 permet de montrer les différentes manières de passer d'une valeur de consigne P1 à une valeur supérieure P2 : le mode gonflage habituel AB, le mode de contrôle itératif conforme à l'invention AC, et un mode intermédiaire AD qu'on peut appeler correctif-adaptatif qui procède ici par trois variations successives AE, EF et FD. On peut utiliser les modes AB ou AE-EF-FD lorsque la différence entre la pression de consigne et la pression mesurée est trop importante, supérieure à une valeur choisie.

En résumé, quand on connecte le pneumatique avec la source d'air comprimé pendant un temps très court de durée ti, la valve d'isolation s'ouvre et une petite quantité d'air qE entre dans le pneumatique ; inversement, lorsqu'on évacue la canalisation à l'atmosphère et que la valve d'isolation se referme, une petite quantité d'air qS sort du pneumatique ; si les deux quantités qE et qS sont égales, la pression du pneumatique ne change pas ; considérons qu'elle vaut Pi. L'effet surprenant est que, si la pression instantanée est différente de Pi, par exemple si elle lui est inférieure, et que l'on maintient la durée ti constante, qE devient plus grande que qS et la pression dans le pneumatique va augmenter à chaque opération jusqu'à la pression Pi qui ne dépend que de ti, et elle ne variera plus par la suite même si l'on poursuit les opérations de contrôle.

## Revendications

1. Procédé d'ajustement de la pression des pneumatiques d'un véhicule équipé d'une installation centralisée de gonflage comprenant une source d'air comprimé, un sélecteur, et des canalisations, un joint tournant ainsi qu'une valve d'isolation entre le sélecteur et chaque pneumatique, ledit procédé consistant en ce que, successivement pour chaque pneumatique, le sélecteur connecte la source d'air comprimé au pneumatique par l'intermédiaire de la canalisation et du joint tournant concernés, ce qui a pour effet d'ouvrir la valve d'isolation, après un temps très court ferme l'arrivée d'air comprimé à la canalisation, puis effectue la mesure de la pression qui est devenue la même dans le pneumatique et dans la canalisation, et enfin évacue ladite canalisation à l'atmosphère, ce qui a pour effet de refermer la valve d'isolation, caractérisé en ce que la durée dudit temps très court est déterminée en fonction de la pression de consigne à obtenir dans le pneumatique concerné, et en ce que l'opération est répétée au moins jusqu'à l'obtention de ladite pression de consigne.

2. Procédé d'ajustement de pression suivant la revendication 1, caractérisé en ce que les opérations d'ajustement de pression se poursuivent continuellement pendant l'utilisation du véhicule.

3. Procédé d'ajustement de pression suivant la revendication 1 ou 2, caractérisé en ce que l'on ajuste la durée dudit temps très court en fonction de la pression de consigne seulement lorsque la pression mesurée a une valeur proche de la pression de consigne.

4. Procédé d'ajustement de pression suivant l'une des revendications précédentes, caractérisé en ce que les opérations d'ajustement se font de manière séquentielle sur plusieurs pneumatiques.

5. Procédé d'ajustement de pression suivant l'une des revendications précédentes, caractérisé en ce que l'on utilise la roue de secours comme réserve d'air comprimé.

## Claims

1. A method of adjusting the pressure of the tyres on a vehicle equipped with a centralised inflating installation which includes a compressed-air source, a selector and lines, a rotary seal as well as an isolating valve between the selector and each tyre, said method consisting in that, successively for each tyre, the selector connects up the compressed-air source to the tyre via the line and the rotary seal in question, this having the effect of opening the isolating valve, after a very short time closes the compressed-air inlet to the line, then measures the pressure which has become the same in both the tyre and the line, and finally vents said line to atmosphere, this having the effect of closing the isolating valve again, characterised in that the duration of said very short time is determined as a function of the set pressure to be obtained in the tyre in question, and in that the operation is repeated at least until said set pressure has been obtained.

2. A method of adjusting the pressure according to Claim 1, characterised in that the pressure adjustment operations are repeated continually while the vehicle is being used.

3. A method of adjusting the pressure according to Claim 1 or 2, characterised in that the duration of said very short time is adjusted as a function of the set pressure only when the measured pressure has a value close to the set pressure.

4. A method of adjusting the pressure according to one of the preceding claims, characterised in that the adjustment operations are performed sequentially on a plurality of tyres.

5. A method of adjusting the pressure according to one of the preceding claims, characterised in that the spare wheel is used as compressed-air reserve.

## Patentansprüche

1. Verfahren zum Nachstellen des Drucks Von Reifen eines Fahrzeuges, das mit einer zentralen Aufpumpeinrichtung ausgestattet ist, die eine Druckluftquelle, eine Wähleinrichtung und Rohrleitungen, ein rotierendes Gelenk sowie ein Trennventil zwischen der Wähleinrichtung und jedem Reifen aufweist, wobei das genannte Verfahren darin besteht, daß die Wähleinrichtung aufeinanderfolgend für jeden Reifen die Druckluftquelle an den Reifen über die betreffende Rohrleitung und das betreffende rotierende Gelenk anschließt, was zur Wirkung hat, das Trennventil zu öffnen, nach einer sehr kurzen Zeit den Druckluftzutritt zur Rohrleitung schließt, dann die Messung des Druckes bewirkt, der im Reifen und in der Rohrleitung derselbe geworden ist, und schließlich die genannte Rohrleitung zur Umgebungsluft hin entleert, und dies zu dem Zweck, das Trennventil wieder zu schließen, dadurch gekennzeichnet, daß die Dauer der genannten, sehr kurzen Zeit als Funktion des im betroffenen Reifen zu erreichenden Einstelldruckes bestimmt wird, und daß der Vorgang mindestens bis zum Erreichen des genannten Einstelldruckes wiederholt wird.

2. Drucknachstellverfahren nach Anspruch 1, dadurch gekennzeichnet, daß die Druck-Nachstellvorgänge während der Benutzung des Fahrzeugs ständig fortgesetzt werden.

3. Drucknachstellverfahren nach Anspruch 1 oder 2, dadurch gekennzeichnet, daß man die Dauer der genannten, sehr kurzen Zeit als Funktion des Einstelldruckes nur dann einstellt, wenn der gemessene Druck einen Wert nahe dem Einstelldruck hat.

4. Drucknachstellverfahren nach einem der vorangehenden Ansprüche, dadurch gekennzeichnet, daß die Nachstellvorgänge aufeinanderfolgend bei mehreren Reifen stattfinden.

5. Drucknachstellverfahren nach einem der vorangehenden Ansprüche, dadurch gekennzeichnet, daß man das Reserverad als Druckluftvorrat benutzt.
